# EUROPEAN PATENT APPLICATION

(11) **EP 4 790 821 A1**
(43) Date of publication of application: **12.08.2026**
(21) Application number: 25880123.2
(22) Date of filing: 30.06.2025
(51) Int. Cl.: H01M 50/514, H01M 50/204, H01M 50/249

(54) **BUSBAR FRAME ASSEMBLY STRUCTURE AND BATTERY MODULE EMPLOYING SAME, AND BATTERY PACK AND VEHICLE INCLUDING BATTERY MODULE**

(30) Priority: 18.10.2024 KR 20240142574
(71) Applicant: LG Energy Solution, Ltd., Seoul 07335 (KR)
(72) Inventor: CHOI, Hyunchul, Daejeon 34122 (KR); YANG, Se Hyeon, Daejeon 34122 (KR)
(74) Representative: BCKIP Part mbB
(86) International application number: PCT/KR2025/009167
(87) International publication number: WO 2026/084178

(57) **Abstract**

The present disclosure provides a busbar frame assembly structure including a busbar frame, a hinge coupler connected to a battery module case and formed in an upper and lower multi-stage structure, and a hinge pin coupled to an upper end portion of the busbar frame.

## Description

### [TECHNICAL FIELD]

The present disclosure relates to a busbar frame assembly structure, a battery module adopting the same, a battery pack, and a vehicle including the battery module, and specifically, relates to a busbar frame assembly structure which prevents damage to a battery cell by preventing interference between the battery cell and a busbar frame when the busbar frame is assembled to a battery module case, a battery module adopting the same, a battery pack, and a vehicle including the battery module.

### [BACKGROUND ART]

Secondary batteries are widely used not only in portable devices, but also in electric vehicles or hybrid vehicles driven by electrical power sources, and power storage devices, since the secondary batteries are easily applicable to a wide range of product groups and have electrical properties such as high energy density.

These secondary batteries have attracted attention as new energy sources for improving environmental friendliness and energy efficiency, since the secondary batteries have a primary advantage of drastically reducing usages of fossil fuels, and do not produce by-products when energy is used.

Battery pack applied to the electric vehicles or the like have a structure in which multiple cell assemblies including a plurality of unit cells are connected in series to obtain a high output.

This unit cell may be repeatedly charged and discharged by electrochemical reactions between components including a positive electrode collector, a negative electrode collector, a separator, an active material, and an electrolyte.

Meanwhile, recently, as a need for a large-capacity structure as well as utilization as an energy storage source has increased, there is an increasing demand for a battery pack having a multi-module structure that collects multiple battery modules in which multiple secondary batteries are connected in series and/or in parallel.

When the battery pack is configured by connecting a plurality of cells in series and/or in parallel, it is a general way to first configure a battery module including at least one cell, and thereafter, to configure a battery pack by adding other components by using at least one of the battery modules.

The number of the battery modules included in the battery pack, or the number of the cells included in the battery module may be set in various ways, depending on a required output voltage or a charge/discharge capacity.

The battery module set in this way includes a plurality of the cells stacked one on another, and a busbar assembly that electrically connects electrode leads of the plurality of cells.

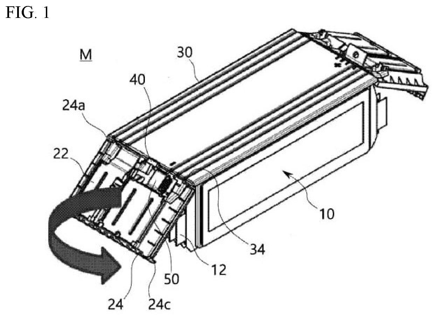

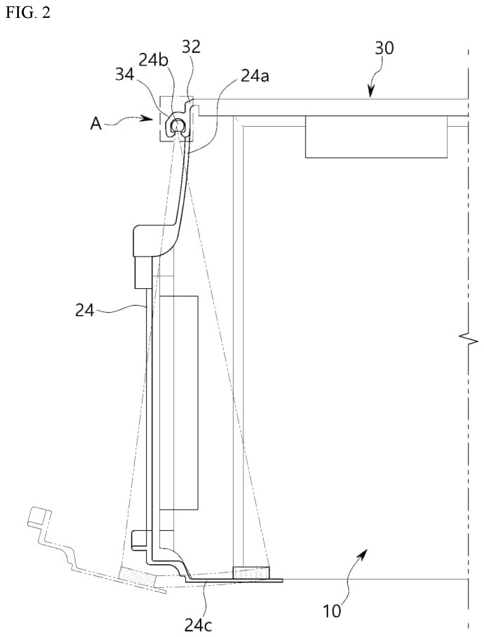

FIG. 1 is a diagram illustrating a state where a busbar frame of a battery module according to the prior art pivots, and is assembled to a cell assembly, and FIG. 2 is a diagram schematically illustrating a state before and after a lower end portion of the busbar frame in FIG. 1 is assembled to the cell assembly.

A battery module M in the related art has a busbar assembly having a structure in which a busbar 22 and a busbar frame 24 are coupled, and a configuration in which an upper end portion 24a of the busbar frame 24 is hinge-coupled to an upper plate 30 covering an upper surface of a cell assembly 10.

Specifically, electrode leads 12 are formed in both end portions of each cell of the cell assembly 10, and a hinge pin 24b is coupled to the upper end portion 24a of the busbar frame 24 of the busbar assembly.

In additional, a lower end portion 24c of the busbar frame 24 is formed by being bent in a direction of the cell assembly 10.

The upper plate 30 includes a connector 32 formed to extend from both end portions in a longitudinal direction, and a hinge coupler 34 connected to the connector 32.

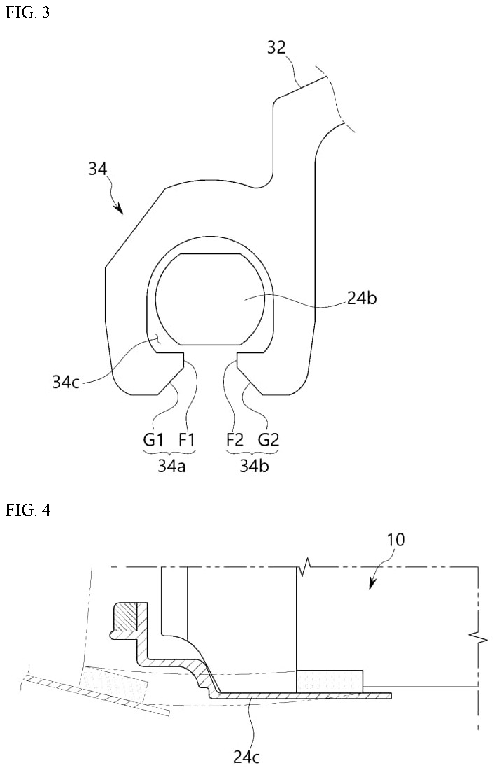

FIG. 3 is a diagram schematically illustrating a hinge pin coupled to an upper end portion of a busbar frame in a battery module in the related art, and a hinge coupler formed to extend to an upper plate of a battery module case, and FIG. 4 is an enlarged view illustrating a lower part in FIG. 2.

A hinge coupler 34 includes a first end portion 34a and a second end portion 34b which are formed in a circular shape by being separated to both ends from a connector 32 formed to extend from an upper plate 30, and the first end portion 34a and the second end portion 34b are formed to be separated from each other.

A first end portion 34a and a second end portion 34b of the hinge coupler 34 form a circular shape, and internally has a fitting space 34c into which a hinge pin 24b coupled to an upper end portion 24a of the busbar frame 24 is fitted and accommodated.

A reference numeral G1 (not described) represents a first guide surface, F1 represents a first fitting surface, G2 represents a second guide surface, and F2 represents a second fitting surface, which are contact surfaces when the hinge pin 24b is fitted into the hinge coupler 34.

In addition, a reference numeral 40 (not described) represents a flexible printed circuit board, and 50 represents a connector.

In a case of a process of assembling the busbar frame 24 to the cell assembly 10 in the battery module M configured in this way in the related art, the hinge pin 24b coupled to the upper end portion 24a of the busbar frame 24 is fitted between the first end portion 34a and the second end portion 34b of the hinge coupler 34, and the lower end portion 24c of the busbar frame 24 is caused to pivot in a direction of the cell assembly 10.

In this case, there is a problem in that damage to the cell assembly 10 may occur due to interference between the lower end portion 24c of the busbar frame 24 and the cell assembly 10.

### (Prior Art Document)

(Patent Document 1) Korean Patent No. 10-2371373 B1

### [DETAILED DESCRIPTION OF INVENTION]

### [TECHNICAL PROBLEMS]

The present disclosure has been made to solve various problems in the related art as described above, and an object of the present disclosure is to provide a busbar frame assembly structure that prevents damage to a battery cell by preventing interference between the battery cell and a busbar frame when the busbar frame is assembled to a battery module case, a battery module adopting the busbar frame, a battery pack, and a vehicle including the battery module.

### [TECHNICAL SOLUTION]

According to the present disclosure, in order to achieve the above-describe objects, there is provided a busbar frame, a hinge coupler connected to a battery module case and formed in an upper and lower multi-stage structure, and a hinge pin coupled to an upper end portion of the busbar frame. The hinge pin is fitted into the hinge coupler located in a lowermost portion of the hinge coupler, and the busbar frame is caused to pivot toward the battery module case, and the hinge pin is located in the hinge coupler located in an uppermost portion of the hinge coupler to lift the pivoted busbar frame upward, and the busbar frame is finally assembled to the battery module case.

The battery module case may include an upper plate, and the upper plate includes a connector formed to extend from both end portions in a longitudinal direction and a hinge coupler connected to the connector.

It is preferable that the hinge coupler has a upper and lower two-stage structure.

The hinge coupler may include a first hinge coupler formed so that the hinge pin connected to the upper end portion of the busbar frame is fitted in a lateral direction, and a second hinge coupler formed so that the hinge pin fitted into the first hinge coupler is lifted upward and fitted.

The second hinge coupler may include a 2-1 end portion and a 2-2 end portion which are separated to both ends from the connector and which respectively extend downward to form a circular shape, and the 2-1 end portion and the 2-2 end portion are formed to be separated from each other rightward and leftward.

A second fitting space into which the hinge pin is fitted and accommodated may be formed inside a circular shape formed by the 2-1 end portion and the 2-2 end portion of the second hinge coupler.

A distance between the 2-1 end portion and the 2-2 end portion may be formed to be smaller than a diameter of the hinge pin, the 2-1 end portion and the 2-2 end portion may be separated rightward and leftward during a process of forcibly fitting the hinge pin into the second fitting space, and the second hinge coupler may be formed of elastic plastic so that the hinge pin is elastically restored after being accommodated in the second fitting space.

The 2-1 end portion may include a 2-1 guide surface formed to be inclined inward and upward and a 2-1 fitting surface formed vertically upward from an upper end of the 2-1 guide surface, and the 2-2 end portion includes a 2-2 guide surface formed to be inclined inward and upward and a 2-2 fitting surface formed vertically from an upper end of the 2-2 guide surface.

The first hinge coupler may include a 1-1 end portion formed integrally with the 2-1 end portion of the second hinge coupler and a 1-2 end portion extending downward from the 2-2 end portion to form a circular shape, and the 1-1 end portion and the 1-2 end portion may be formed to be separated from each other upward and downward.

The 1-1 end portion may include a 1-1 fitting surface formed horizontally outward from a lower end of the 1-1 guide surface and a 1-1 guide surface formed to be inclined outward and upward from an outer end portion of the 1-1 fitting surface.
the 1-2 end portion may include a 1-2 guide surface formed to be inclined inward and upward and a 1-2 fitting surface formed horizontally inward from an upper end of the 1-2 guide surface.

A first fitting space into which the hinge pin is fitted and accommodated may be formed inside a circular shape formed by extending the 1-2 end portion of the first hinge coupler downward.

A distance between the 1-1 end portion and the 1-2 end portion may be formed to be smaller than a diameter of the hinge pin, and the 1-1 end portion and the 1-2 end portion may be separated upward and downward during a process of forcibly fitting the hinge pin into the first fitting space, and the first hinge coupler may be formed of elastic plastic so that the hinge pin is elastically restored after being accommodated in the first fitting space.

Meanwhile, the present disclosure may provide a battery module adopting the busbar frame assembly structure.

In addition, the present disclosure may provide a battery pack including the battery module adopting the busbar frame assembly structure, and a pack case that accommodates a plurality of the battery modules.

In addition, the present disclosure may provide a vehicle including the battery pack.

### [EFFECT OF INVENTION]

According to the solution to the above-described problem, the present disclosure has the following advantageous effects.

The present disclosure has an advantageous effect as follows. The hinge coupler is formed into a multi-stage structure, the hinge pin connected to the upper end portion of the busbar frame is fitted into the hinge coupler located in the lowermost portion of the hinge coupler. Thereafter, the busbar frame is caused to pivot toward the battery module case, and the hinge pin is located in the hinge coupler located in the uppermost portion of the hinge coupler so that the busbar frame pivoted in this way is lifted upward. The busbar frame is finally assembled to the battery module case. In this manner, when the busbar frame is assembled to the battery module case, damage to the battery cell may be prevented by preventing interference between the battery cell and the busbar frame.

In addition, the present disclosure has an advantageous effect as follows. The inclined guide surfaces are respectively formed in the 1-1 end portion and the 1-2 end portion of the first hinge coupler, and the 2-1 end portion and the 2-2 end portion of the second hinge coupler. In this manner, the hinge pin may be easily forcibly fitted. Therefore, it is convenient for assembling.

In addition, the present disclosure has an advantageous effect as follows. The first hinge coupler and the second hinge coupler are formed of the elastic plastic. In this manner, the hinge pin is forcibly fitted into the first hinge coupler and the second hinge coupler. Thereafter, when the hinge pin is accommodated in the first fitting space and the second fitting space, the first hinge coupler and the second hinge coupler are elastically restored to prevent the hinge pin from being separated from the first hinge coupler and the second hinge coupler.

### [BRIEF DESCRIPTION OF THE DRAWING]

FIG. 1 is a diagram illustrating a state where a busbar frame of a battery module pivots to be assembled to a cell assembly in the related art.
FIG. 2 is a diagram schematically illustrating a state before and after a lower end portion of the busbar frame in FIG. 1 is assembled to the cell assembly.
FIG. 3 is a diagram schematically illustrating a hinge pin coupled to an upper end portion of the busbar frame in the battery module and a hinge coupler formed to extend to an upper plate of a battery module case in the related art.
FIG. 4 is an enlarged view illustrating a lower part in FIIG. 2.
FIG. 5 is a diagram illustrating a multi-stage hinge coupler and a hinge pin which are adopted in a busbar frame assembly structure according to the present disclosure.
FIG. 6 is a diagram illustrating a state where the busbar frame pivots when the hinge pin is located in a first hinge coupler on a lower side in the hinge coupler adopted in the busbar frame assembly structure according to the present disclosure.
FIG. 7 is an enlarged view illustrating a lower part in FIIG. 6.
FIG. 8 is a diagram illustrating a state where the busbar frame is lifted upward when the hinge pin is located in a second hinge coupler on an upper side in the hinge coupler adopted in the busbar frame assembly structure according to the present disclosure.
FIG. 9 is an enlarged view illustrating a lower part in FIIG. 8.
FIG. 10 is a diagram schematically illustrating a configuration of a battery pack according to the present disclosure.
FIG. 11 is a diagram schematically illustrating a vehicle including the battery pack in FIIG. 10.

### [BEST MODE FOR CARRYING OUT THE INVENTION]

Advantages and features of the present disclosure, and methods for achieving the advantages and features of the present disclosure will become apparent by referring to embodiments described below in detail together with the accompanying drawings. However, the present disclosure is not limited to the embodiments disclosed below, and may be realized in various different forms. The present embodiments are provided only to make the disclosure of the present disclosure complete, and to fully address the scope of the invention to those skilled in the art to which the present disclosure pertains. The present disclosure is defined only by the appended claims. Therefore, in some embodiments, well-known process steps, well-known device structures, and well-known techniques are not specifically described in order to avoid ambiguity in the interpretation of the present disclosure. The same reference numerals refer to the same elements throughout the specification.

In order to clearly represent multiple layers and regions in the drawings, a thickness may be enlarged. The same reference numerals are assigned to similar elements throughout the specification. When it is described that one element such as a layer, a film, a region, or a plate is located "over" another element, this description includes not only a case where one element is located "directly over" another element, but also a case where still another element is located therebetween. Conversely, when it is described that one element is located "directly over" another element, this description means that no other element is located therebetween. In addition, when it is described that one element such as the layer, the film, the region, or the plate is located "below" another element, this description includes not only a case where one element is located "directly below" another element, but also a case where still another element is located therebetween. Conversely, when it is described that one element is located "directly below" another element, this description means that no other element is located therebetween.

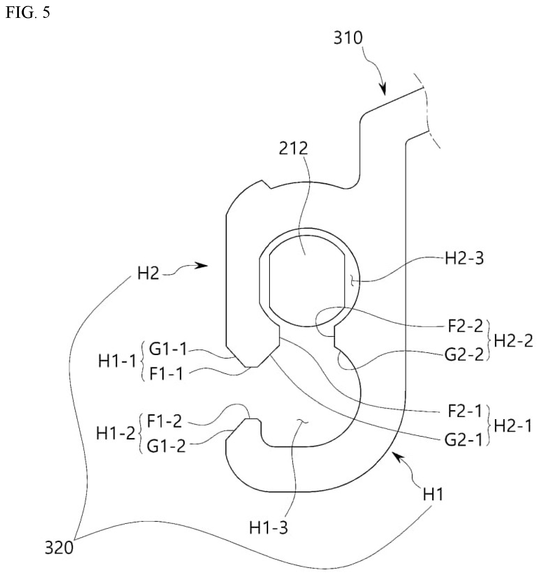

FIG. 5 is a diagram illustrating a multi-stage hinge coupler and a hinge pin which are adopted in a busbar frame assembly structure according to the present disclosure.

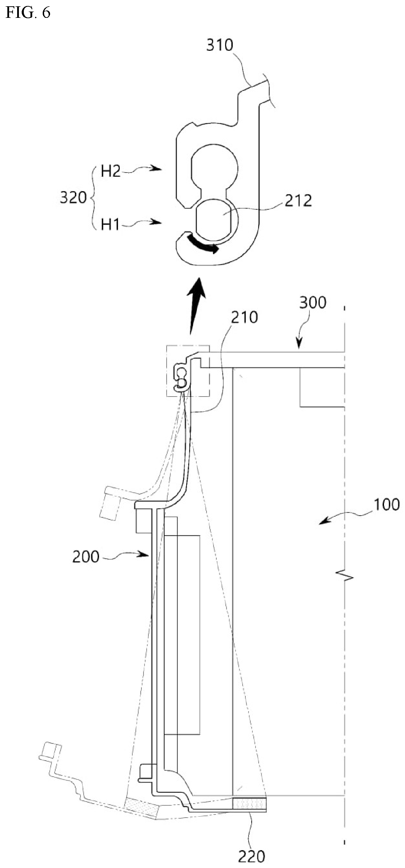

Components other than the hinge coupler will be described with reference to FIGS. 6 to 9 (to be described later).

A battery module according to the present disclosure includes a cell assembly 100, a busbar frame 200 in which a hinge pin 212 is coupled to an upper end portion 210 and a lower end portion 220 is bent in an L-shape in a direction of the cell assembly 100, and an upper plate 300 covering an upper surface of the cell assembly 100.

The battery module according to the present disclosure adopts a structure in which the busbar frame 200 is assembled to a hinge coupler 320 formed into an upper and lower multi-stage structure by being connected to an upper end of an upper plate 300 of a battery module case.

The busbar frame assembly structure as described above is configured as follows. The hinge pin 212 connected to the upper end portion 210 of the busbar frame 200 is fitted into a hinge coupler (first hinge coupler H1) located in a lowermost portion of the hinge coupler 320. Thereafter, the busbar frame 200 is caused to pivot toward the battery module case The hinge pin 212 is located in a hinge coupler (second hinge coupler H2) located in an uppermost portion of the hinge coupler 320 so that the busbar frame 200 pivoted in this way is lifted upward. In this manner, the busbar frame 200 is finally assembled to the battery module case.

Here, the lower end portion 220 bent into an L-shape in the busbar frame 200 does not interfere with the cell assembly 100. Therefore, the battery cell is not damaged.

The upper plate 300 of the battery module case includes a connector 310 formed to extend from both end portions in a longitudinal direction, and a hinge coupler 320 connected to the connector 310.

The hinge coupler 320 may be formed into an upper and lower multi-stage structure, and an upper and lower two-stage structure will be described as an example in the present disclosure.

The hinge coupler 320 includes the first hinge coupler H1 formed so that the hinge pin 212 connected to the upper end portion 210 of the busbar frame 200 is fitted, and the second hinge coupler H2 formed so that the hinge pin 212 fitted into the first hinge coupler H1 is lifted upward and fitted.

The first hinge coupler H1 may include a 1-1 end portion H1-1 and a 1-2 end portion H1-2. The 1-1 end portion H1-1 is formed integrally with the 2-1 end portion H2-1 of the second hinge coupler H2 (to be described later), and the 1-2 end portion H1-2 extends downward from the 2-2 end portion H2-2 of the second hinge coupler H2 to form a circular shape.

Here, the 1-1 end portion H1-1 and the 1-2 end portion H1-2 of the first hinge coupler H1 are formed to be separated from each other upward and downward. The reason is that the hinge pin 212 connected to the upper end portion 210 of the busbar frame 200 is fitted in a lateral direction.

The 1-1 end portion H1-1 of the first hinge coupler H1 includes a 1-1 fitting surface F1-1 formed horizontally outward from a lower end of the 2-1 guide surface G2-1 of the second hinge coupler H2 (to be described later), and a 1-1 guide surface G1-1 formed to be inclined outward and upward from an outer end portion of the 1-1 fitting surface F1-1.

In addition, the 1-2 end portion H1-2 includes a 1-2 guide surface G1-2 formed to be inclined inward and upward, and a 1-2 fitting surface F1-2 formed horizontally inward from an upper end of the 1-2 guide surface G1-2.

In this way, the 1-1 guide surface G1-1 and the 1-2 guide surface G1-2 which are respectively formed to be inclined are formed in the 1-1 end portion H1-1 and the 1-2 end portion H1-2 of the first hinge coupler H1. In this manner, the hinge pin 212 may be easily assembled by forcible fitting.

A first fitting space H1-3 into which the hinge pin 212 is fitted and accommodated is formed inside a circular shape formed by extending the 1-2 end portion H1-2 of the first hinge coupler H1 downward.

A distance between the 1-1 end portion H1-1 and the 1-2 end portion H1-2 is formed to be smaller than a diameter of the hinge pin 212.

During a process of forcibly fitting the hinge pin 212 into the first fitting space H1-3, the 1-1 end portion H1-1 and the 1-2 end portion H1-2 are separated upward and downward, and the first hinge coupler H1 may be formed of elastic plastic so that the hinge pin 212 is elastically restored after being accommodated in the first fitting space H1-3.

In this way, when the hinge pin 212 is accommodated in the first fitting space H1-3 after being forcibly fitted into the first hinge coupler H1, the first hinge coupler H1 is elastically recovered, thereby preventing the hinge pin 212 from being separated from the first hinge coupler H1.

The second hinge coupler H2 includes a 2-1 end portion H2-1 and a 2-2 end portion H2-2 which are separated to both ends from the connector 310 extending from the upper plate 300 and extending downward to form a circular shape.

The 2-1 end portion H2-1 and the 2-2 end portion H2-2 are formed to be separated from each other rightward and leftward. The reason is that the hinge pin 212 connected to the upper end portion 210 of the busbar frame 200 may be fitted into the second hinge coupler H2 by being lifted upward in a state where the hinge pin 212 is accommodated in the first fitting space H1-3.

A second fitting space H2-3 into which the hinge pin 212 is fitted and accommodated is formed inside a circular shape formed by the 2-1 end portion H2-1 and the 2-2 end portion H2-2 of the second hinge coupler H2.

A distance between the 2-1 end portion H2-1 and the 2-2 end portion H2-2 of the second hinge coupler H2 is formed to be smaller than a diameter of the hinge pin 212.

During a process of forcibly fitting the hinge pin 212 accommodated in the first fitting space H1-3 into the second fitting space H2-3, the 2-1 end portion H2-1 and the 2-2 end portion H2-2 are separated rightward and leftward, and the second hinge coupler H2 is formed of the elastic plastic so that the hinge pin 212 is elastically restored after being accommodated in the second fitting space H2-3.

In this way, when the hinge pin 212 is accommodated in the second fitting space H2-3 after being forcibly fitted into the second hinge coupler H2, the second hinge coupler H2 is elastically recovered, thereby preventing the hinge pin 212 from being separated from the second hinge coupler H2.

The 2-1 end portion H2-1 of the second hinge coupler H2 includes a 2-1 guide surface G2-1 formed to be inclined inward and upward, and a 2-1 fitting surface F2-1 formed vertically upward from an upper end of the 2-1 guide surface G2-1.

In addition, the 2-2 end portion H2-2 includes a 2-2 guide surface G2-2 formed to be inclined inward and upward, and a 2-2 fitting surface F2-2 formed vertically from an upper end of the 2-2 guide surface G2-2.

The 2-1 guide surface G2-1 and the 2-2 guide surface G2-2 which are respectively formed to be inclined are formed in the 2-1 end portion H2-1 and the 2-2 end portion H2-2 of the second hinge coupler H2. In this manner, the hinge pin 212 may be easily forcibly fitted. Therefore, there is an advantage that the assembling is convenient.

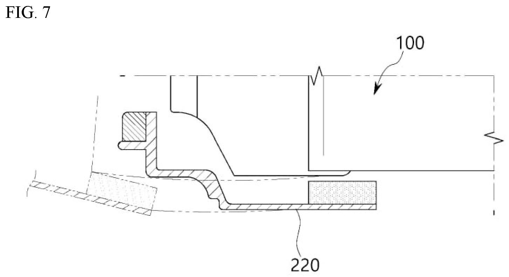

FIG. 6 is a diagram illustrating a state where the busbar frame pivots when the hinge pin is located in the first hinge coupler on the lower side in the hinge coupler adopted in the busbar frame assembly structure according to the present disclosure, and FIG. 7 is an enlarged view illustrating a lower part in FIIG. 6.

The hinge pin 212 connected to the upper end portion 210 of the busbar frame 200 is located between the 1-1 end portion H1-1 and the 1-2 end portion H1-2 of the first hinge coupler H1. Thereafter, when the hinge pin 212 is pushed in a rightward direction in FIG. 6, the hinge pin 212 comes into contact with the 1-1 guide surface G1-1 and the 1-2 guide surface G1-2. When a force is applied more in the rightward direction, the hinge pin 212 is guided by the 1-1 guide surface G1-1 and the 1-2 guide surface G1-2, and passes through the 1-1 fitting surface F1-1 and the 1-2 fitting surface F1-2. In this case, the 1-1 end portion H1-1 of the first hinge coupler H1 formed of the elastic material is pushed upward, and the 1-2 end portion H1-2 is pushed downward. In this manner, the hinge pin 212 is accommodated in the first fitting space H1-3.

When the busbar frame 200 is caused to pivot in a direction of the cell assembly 100 in a state where the hinge pin 212 is accommodated in the first fitting space H1-3, the lower end portion 220 bent into an L-shape in the busbar frame 200 is located in the lower portion of the cell assembly 100 without any interference with the cell assembly 100.

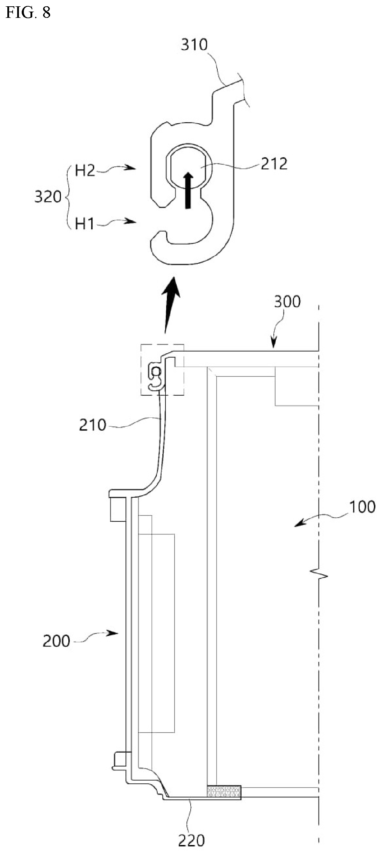

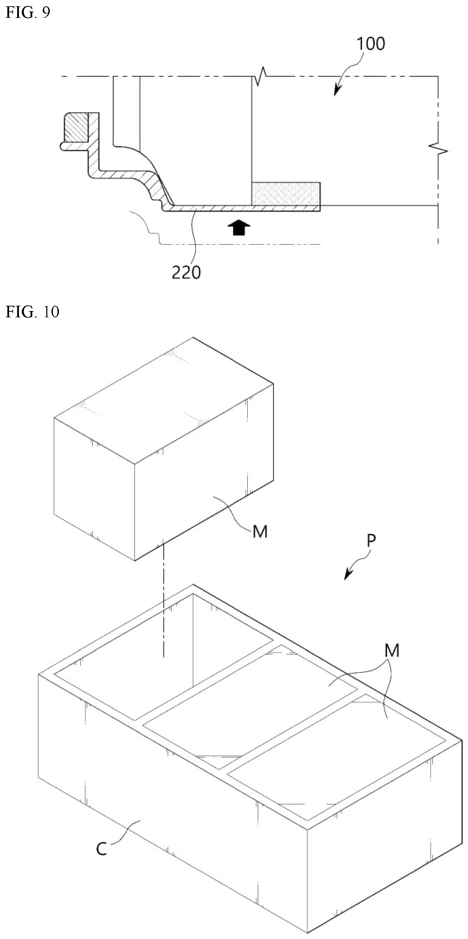

FIG. 8 is a diagram illustrating a state where the busbar frame is lifted upward when the hinge pin is located in the second hinge coupler on the upper side in the hinge coupler adopted in the busbar frame assembly structure according to the present disclosure, and FIG. 9 is an enlarged view illustrating a lower part in FIIG. 8.

The hinge pin 212 accommodated in the first fitting space H1-3 is located between the 2-1 end portion H2-1 and the 2-2 end portion H2-2 of the second hinge coupler H2. Thereafter, when the hinge pin 212 is lifted upward in FIG. 8, the hinge pin 212 comes into contact with the 2-1 guide surface G2-1 and the 2-2 guide surface G2-2. When the force is more applied in the upward direction, the hinge pin 212 is guided by the 2-1 guide surface G2-1 and the 2-2 guide surface G2-2, and passes through the 2-1 fitting surface F2-1 and the 2-2 fitting surface F2-2. In this case, the 2-1 end portion H2-1 of the second hinge coupler H2 formed of the elastic material is pushed leftward, and the 2-2 end portion H2-2 is pushed rightward. In this manner, the hinge pin 212 is accommodated in the second fitting space H2-3.

Accordingly, the lower end portion 220 of the busbar frame 200 is lifted upward, and is brought into contact with a bottom of the cell assembly 100.

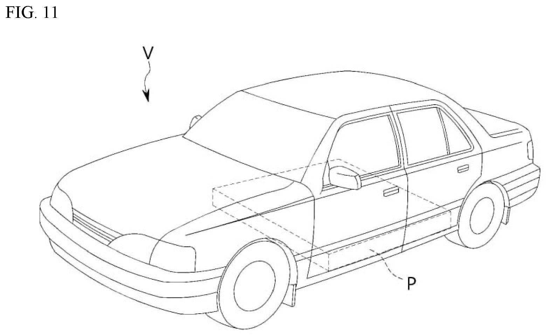

FIG. 10 is a diagram schematically illustrating a configuration of a battery pack according to the present disclosure, and FIG. 11 is a diagram schematically illustrating a vehicle including the battery pack in FIIG. 10.

A battery pack P includes the battery module M described above and the pack case C that accommodates a plurality of the battery modules M.

The battery pack P configured in this way may be provided in a vehicle V as a fuel source for the vehicle.

For example, the battery pack P may be provided in the vehicle V as an electric vehicle, a hybrid vehicle, or any other way that may utilize the battery pack P as a fuel source.

In addition, the battery pack P may also be provided in other devices, mechanisms, and facilities, such as an energy storage system that uses a secondary battery, in addition to the vehicle V.

In this way, according to the present disclosure, the battery pack P and the device, the mechanism, and the facility which include the battery pack P such as the vehicle V include the battery module M described above. Therefore, it is possible to realize the battery pack P having all advantages of the battery module M described above, and the device, the mechanism, and the facility which such as the vehicle which include the battery pack P.

### [DESCRIPTION OF REFERENCE NUMERALS]

100: cell assembly
200: busbar frame
212: hinge pin
300: upper plate
310: connector
320: hinge coupler
H1: first hinge coupler
H2: second hinge coupler

## Claims

1. A busbar frame assembly structure comprising:
a busbar frame;
a hinge coupler connected to a battery module case and formed in an upper and lower multi-stage structure; and
a hinge pin coupled to an upper end portion of the busbar frame,
wherein the hinge pin is fitted into the hinge coupler located in a lowermost portion of the hinge coupler, and the busbar frame is caused to pivot toward the battery module case, and the hinge pin is located in the hinge coupler located in an uppermost portion of the hinge coupler to lift the pivoted busbar frame upward, and the busbar frame is finally assembled to the battery module case.

2. The busbar frame assembly structure of claim 1, wherein the battery module case includes an upper plate, and the upper plate includes a connector formed to extend from both end portions in a longitudinal direction and a hinge coupler connected to the connector.

3. The busbar frame assembly structure of claim 2, wherein the hinge coupler has a upper and lower two-stage structure.

4. The busbar frame assembly structure of claim 3, wherein the hinge coupler includes a first hinge coupler formed so that the hinge pin connected to the upper end portion of the busbar frame is fitted in a lateral direction, and a second hinge coupler formed so that the hinge pin fitted into the first hinge coupler is lifted upward and fitted.

5. The busbar frame assembly structure of claim 4, wherein the second hinge coupler includes a 2-1 end portion and a 2-2 end portion which are separated to both ends from the connector and which respectively extend downward to form a circular shape, and the 2-1 end portion and the 2-2 end portion are formed to be separated from each other rightward and leftward.

6. The busbar frame assembly structure of claim 5, wherein a second fitting space into which the hinge pin is fitted and accommodated is formed inside a circular shape formed by the 2-1 end portion and the 2-2 end portion of the second hinge coupler.

7. The busbar frame assembly structure of claim 6, wherein a distance between the 2-1 end portion and the 2-2 end portion is formed to be smaller than a diameter of the hinge pin, the 2-1 end portion and the 2-2 end portion are separated rightward and leftward during a process of forcibly fitting the hinge pin into the second fitting space, and the second hinge coupler is formed of elastic plastic so that the hinge pin is elastically restored after being accommodated in the second fitting space.

8. The busbar frame assembly structure of claim 5, wherein the 2-1 end portion includes a 2-1 guide surface formed to be inclined inward and upward and a 2-1 fitting surface formed vertically upward from an upper end of the 2-1 guide surface, and the 2-2 end portion includes a 2-2 guide surface formed to be inclined inward and upward and a 2-2 fitting surface formed vertically from an upper end of the 2-2 guide surface.

9. The busbar frame assembly structure of claim 8, wherein the first hinge coupler includes a 1-1 end portion formed integrally with the 2-1 end portion of the second hinge coupler and a 1-2 end portion extending downward from the 2-2 end portion to form a circular shape, and the 1-1 end portion and the 1-2 end portion are formed to be separated from each other upward and downward.

10. The busbar frame assembly structure of claim 9, wherein the 1-1 end portion includes a 1-1 fitting surface formed horizontally outward from a lower end of the 1-1 guide surface and a 1-1 guide surface formed inclined outward and upward from an outer end portion of the 1-1 fitting surface.

11. The busbar frame assembly structure of claim 9, wherein the 1-2 end portion includes a 1-2 guide surface formed to be inclined inward and upward and a 1-2 fitting surface formed horizontally inward from an upper end of the 1-2 guide surface.

12. The busbar frame assembly structure of claim 9, wherein a first fitting space into which the hinge pin is fitted and accommodated is formed inside a circular shape formed by extending the 1-2 end portion of the first hinge coupler downward.

13. The busbar frame assembly structure of claim 12, wherein a distance between the 1-1 end portion and the 1-2 end portion is formed to be smaller than a diameter of the hinge pin, and the 1-1 end portion and the 1-2 end portion are separated upward and downward during a process of forcibly fitting the hinge pin into the first fitting space, and the first hinge coupler is formed of elastic plastic so that the hinge pin is elastically restored after being accommodated in the first fitting space.

14. A battery module adopting the busbar frame assembly structure of any one of claims 1 to 13.

15. A battery pack comprising:
the battery module of claim 14; and
a pack case that accommodates a plurality of the battery modules.

16. A vehicle comprising:
the battery pack of claim 15.
